# DEMANDE DE BREVET EUROPEEN

(11) **EP 1 160 966 A1**
(43) Date de publication de la demande: **05.12.2001**
(21) Numéro de dépôt: 00810479.6
(22) Date de dépôt: 31.05.2000
(51) Int. Cl.: H02P 6/18

(54) **Procédé de détermination de la position du rotor d'un moteur électromagnétique sans collecteur et dispositif pour sa mise en oeuvre**

(71) Demandeur: Ecole Polytechnique Fédérale de Lausanne (EPFL), 1015 Lausanne (CH)
(72) Inventeur: Bonvin, Frédéric, 1950 Sion (CH); Cardoletti, Laurent, 1847 Rennaz (CH); Perriard, Yves, 2000 Neuchâtel (CH)
(74) Mandataire: Gresset, Jean

(57) **Abrégé**

Procédé de détermination de la position angulaire du rotor d'un moteur électromagnétique sans collecteur de commutation. Selon l'invention, le procédé comporte les étapes suivantes:
■ appliquer, aux bornes d'un premier (R) puis d'un deuxième bobinage (S), d'impulsion de polarité inverse, déterminées par une durée, une intensité, une charge et une pente, l'un de ces paramètres ayant une valeur prédéfinie et les autres une valeur dépendant du temps et de la position du rotor,
■ déterminer, pour chaque impulsion, un signal d'un premier type (V_{pR},V_{nR}) représentatif de l'un des paramètres dont la valeur n'est pas prédéfinie,
■ définir deux signaux d'un deuxième type (V_{pR0},V_{nR0}) respectivements représentatifs de la différence entre les signaux du premier type correspondant à chaque bobinage,
■ établir, à partir d'informations mémorisées, une corrélation avec les valeurs des signaux du deuxième type pour déterminer les positions angulaires possibles dudit rotor, et
■ sélectionner parmi lesdites positions angulaires celle qui est la plus probable.

## Description

La présente invention se rapporte aux moteurs électromagnétiques sans collecteur de commutation, du type comportant un stator formé d'une armature en matériau magnétique doux et de plusieurs bobinages disposés au voisinage de l'armature et munis chacun de deux bornes, et un rotor comportant un aimant qui définit un axe magnétique et est disposé en regard du stator.

Dans la présente demande, plusieurs termes nécessitent d'être précisés quant à leur signification. Ainsi, le terme d'aimant recouvre aussi bien les aimants permanents que les électro-aimants. Il faut considérer comme matériau magnétique doux toute matière assurant une bonne conduction d'un flux magnétique engendré par un aimant. Le mot "charge" désigne la valeur de l'intégrale d'un courant électrique entre deux instants donnés.

L'invention concerne, plus particulièrement, un procédé de détermination de la position angulaire du rotor d'un moteur sans collecteur . Dans la suite de la description, cet angle sera aussi appelé "angle du rotor" mais on utilisera également, dans le même sens, les expressions "position angulaire" et "position" du rotor.

L'invention concerne aussi un dispositif pour la mise en oeuvre de ce procédé.

Il est souvent nécessaire de connaître la position d'un rotor, spécialement au moment du démarrage du moteur, afin que le circuit de commande puisse mettre le rotor en mouvement dans la direction voulue et avec le couple optimum.

De nombreuses solutions ont déjà été proposées. Il y a, d'abord, celles qui font usage de capteurs coopérant avec l'axe de rotation du moteur, tels que des cellules photoélectriques ou des éléments à effet Hall. Un moteur utilisant des photodiodes a, par exemple, été décrit en détail dans le brevet CH 670 341. Si le but recherché peut être atteint de cette façon, c'est cependant au prix de certains inconvénients. En effet, les capteurs prennent de la place, nécessitent des connexions, renchérissent le produit et, soumis aux vibrations et à la température élevée du moteur, sont susceptibles de diminuer la fiabilité du système. En outre, pour avoir une bonne résolution angulaire, le nombre de capteurs doit être élevé. Typiquement, avec trois capteurs seulement, la position angulaire ne peut pas être déterminée à mieux que ±30 degrés près.

Pour ces raisons, différentes réalisations sans capteurs ont été proposées. Elles s'appuient sur le fait que les propriétés magnétiques locales du stator varient en fonction de la position du rotor et des courants circulant dans les bobinages de l'inducteur. Le champ d'induction magnétique créé par l'aimant du rotor et celui créé par les courants dans les bobinages s'opposent, en effet, en certains endroits du stator mais s'additionnent en d'autres où ils provoquent alors une saturation locale du matériau.

Si le rotor est déplacé ou si les courants sont modifiés en intensité ou en sens, il en sera de même des zones saturées. Or, la variation, en fonction du temps, du courant circulant dans un bobinage, en réponse à une tension d'amplitude et de polarité données appliquée à ses bornes, dépend de la self-inductance de ce bobinage et donc de l'état magnétique du matériau traversé par les lignes du champ magnétique créé par ce courant. Mais, puisque l'état magnétique du matériau dépend aussi de la position du rotor, finalement, pour des conditions d'excitation du bobinage identiques, la variation du courant avec le temps sera représentative de l'angle du rotor.

Le brevet US 5 117 165 (Cassat) décrit un moteur dans lequel ce principe est appliqué. Le stator comporte un bobinage triphasé connecté en étoile, et le rotor, supposé au repos, est constitué par un aimant.

Une tension d'amplitude et de polarité données est appliquée aux bornes de l'un des bobinages et la valeur I₁ du courant qui en résulte, après un laps de temps donné, est mesurée et mémorisée. Ce courant est représentatif, comme il vient d'être expliqué, de la position du rotor. Dans ce document, il est toutefois montré que la relation entre le courant et l'angle n'est pas univoque. Dans un tel moteur, un même courant peut, en effet, correspondre à plus d'une position du rotor. Pour lever l'ambiguïté, une autre tension de même amplitude, mais de polarité opposée, est appliquée aux mêmes bornes, et le courant I₂ qui en résulte est mesuré après le même laps de temps, puis mémorisé.

Le signe de I₁-I₂ permet alors de déterminer si l'angle du rotor est compris, par exemple, entre 0 et 180 degrés ou entre 180 et 360 degrés. En d'autres termes, le signe de I₁-I₂ permet d'établir si l'angle du rotor est de 90 ou de 270 degrés, avec une incertitude chaque fois de ±90 degrés.

En procédant de la même manière avec les autres bobinages, la position du rotor peut finalement être localisée avec une marge d'erreur de ±30 degrés autour des angles 0, 60, 120, 180, 240 et 300 degrés.

La mesure de l'angle permet ensuite de s'assurer que le rotor a tourné, en vérifiant que les courants mesurés ont changé. Ensuite, la tension induite par le rotor, qui est représentative de son angle et de sa vitesse, devient suffisante en amplitude pour permettre l'asservissement en phase du champ inducteur à la position du rotor, de manière connue.

Une variante de la solution ci-dessus est décrite dans le brevet EP 462 729, correspondant au brevet US 5 028 852 (Dunfield), dans laquelle ce ne sont pas les courants qui sont mesurés après un temps donné, mais les temps *T*_{*1*} et *T*_{*2*} nécessaires pour que le courant atteigne une valeur prédéterminée. Le signe de *T*_{*1*}*-T*_{*2*} permet alors de trouver la position du rotor avec la même précision que dans le cas précédent.

L'une et l'autre des solutions mentionnées plus haut permettent de déterminer la position du rotor au repos. Comme la structure du stator engendre généralement un couple de positionnement, le rotor occupe, au repos, des positions bien définies. Aussi, avec une précision de l'ordre de la moitié de l'angle parcouru par le rotor durant une phase du moteur, la position est, en fait, connue à quelques degrés près.

Dans certaines applications, par exemple lorsque le rotor doit tourner à faible vitesse, ou dans des moteurs dont le stator ne définit pas de couple de positionnement, il est souhaitable, voire nécessaire, de déterminer avec précision la position du rotor, afin d'appliquer des impulsions motrices engendrant un couple maximum pour un courant donné.

La présente invention a pour but de permettre une telle détermination.

Selon l'invention, le procédé comporte les étapes suivantes:
■ appliquer, respectivement aux bornes d'un premier puis d'un deuxième bobinage, une paire d'impulsions successives de polarité inverse, déterminées par une durée, une intensité, une charge et une pente, l'un de ces paramètres ayant une valeur prédéfinie et les autres une valeur dépendant du temps et de la position du rotor,
■ déterminer, pour chaque impulsion, un signal d'un premier type représentatif de l'un des paramètres dont la valeur n'est pas prédéfinie,
■ définir deux signaux d'un deuxième type respectivement représentatifs de la valeur de la différence entre les signaux du premier type correspondant à chaque bobinage,
■ établir, à partir d'informations initialement mémorisées, une corrélation avec les valeurs des signaux du deuxième type pour déterminer les positions angulaires possibles dudit rotor, et
■ sélectionner parmi lesdites positions angulaires celle qui est la plus probable.

La pratique a montré que la solution la plus simple consiste à choisir le temps comme paramètre prédéterminé, alors que le signal est représentatif de l'intensité du courant.

Afin d'assurer les meilleurs conditions de mesures, le moteur est avantageusement alimenté par l'application d'une tension aux bornes des bobinages, à l'exception des périodes durant lesquelles les paires d'impulsion sont appliquées.

La présente invention concerne également à un dispositif pour mesurer la position du rotor d'un moteur tel que défini plus haut. Selon l'invention, ce dispositif comprend:
■ un générateur d'impulsions comportant des moyens pour appliquer, respectivement aux bornes d'un premier puis d'un deuxième bobinage, une paire d'impulsions successives de polarité inverse, déterminées par une durée, une intensité, une charge et une pente, l'un de ces paramètres ayant une valeur prédéfinie et les autres une valeur dépendant du temps et de la position du rotor,
■ un circuit de mesure fournissant, pour chaque impulsion, un signal d'un premier type représentatif de l'un des paramètres dont la valeur n'est pas prédéfinie, et
■ des moyens de calcul comportant:
   - un circuit soustracteur connecté au circuit de mesure et fournissant deux signaux d'un deuxième type respectivement représentatifs de la différence entre les signaux du premier type correspondant à chaque bobinage,
   - une mémoire contenant des informations établissant une corrélation entre les valeurs des signaux de deuxième type et la position angulaire du rotor,
   - un circuit de comparaison connecté à la mémoire et au circuit soustracteur, pour déterminer, à partir des valeurs des signaux de deuxième type et en référence aux informations contenues dans la mémoire, les positions angulaires possibles du rotor, et
   - un circuit de détermination relié au circuit de comparaison, pour définir laquelle des positions angulaires est la plus probable.

Un tel dispositif permet de connaître la position d'un rotor à mieux que 1° d'angle.

Dans la plupart des cas, le moteur comporte un circuit de commande relié aux bornes des bobinages du stator pour les alimenter séquentiellement et créer un champ d'induction magnétique tournant produisant un couple sur le rotor. Le dispositif comprend, alors, des moyens pour désactiver le circuit de commande durant l'application desdites impulsions.

De manière avantageuse, le circuit de mesure comporte des moyens pour mesurer la valeur qu'atteint l'intensité du courant après un temps de durée prédéterminée.

Dans un mode de réalisation privilégié, le circuit de comparaison comporte des moyens pour déterminer un premier ensemble de positions angulaires correspondant au premier signal de deuxième type, et un deuxième ensemble de positions angulaires correspondant au deuxième signal de deuxième type, tandis que le circuit de détermination comporte:
■ des moyens pour comparer les positions angulaires du premier et du deuxième ensemble et pour sélectionner l'angle commun aux deux ensembles, et
■ des moyens pour transmettre la valeur dudit angle comme position instantanée dudit rotor.

D'autres caractéristiques de la présente invention ressortiront de la description qui va suivre, faite en regard du dessin annexé sur lequel:
- la figure 1 représente le schéma électrique d'un dispositif selon l'invention, destiné à équiper un moteur à courant continu triphasé sans collecteur;
- la figure 2 montre en a) la forme des impulsions de tension appliquées au bobinage d'une phase du stator et en b) la variation en fonction du temps des tensions représentatives des courants circulant dans le bobinage en réponse aux impulsions de tension représentées en a);
- la fig. 3 est une vue schématique d'une partie de la figure 1; et
- les figures 4 et 5 servent à expliquer comment la position angulaire du rotor peut être déterminée.

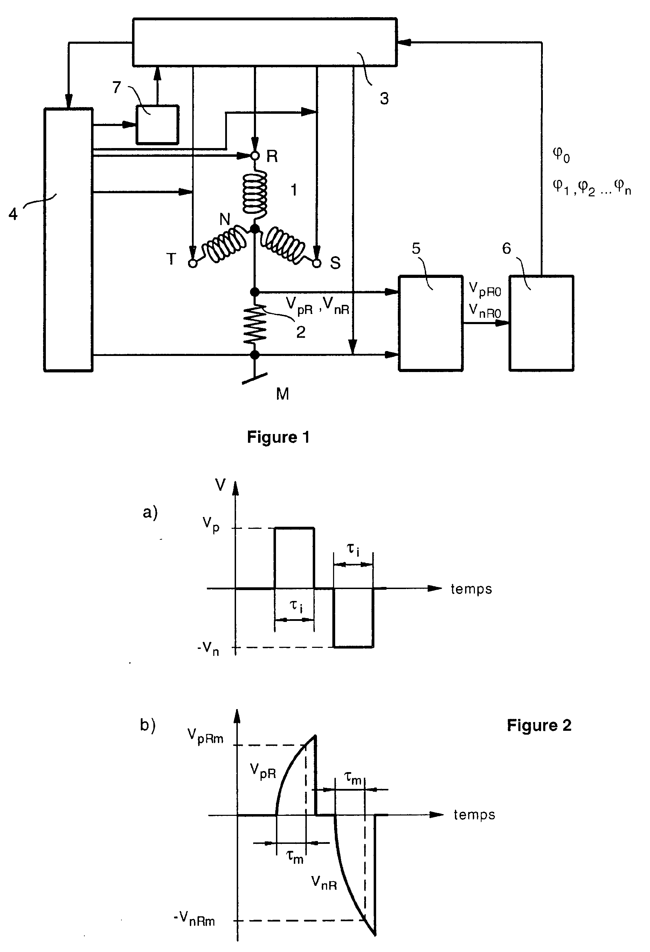

La figure 1 montre, de manière schématique, un dispositif destiné à équiper un moteur 1 comportant, de manière classique, un rotor et un stator (non représentés), et formé d'une résistance de mesure 2, d'un circuit de commande et de puissance 3, d'un générateur d'impulsions 4, d'un circuit de mesure 5, de moyens de calcul 6 et de moyens 7 pour désactiver le circuit de commande 3.

Le moteur 1 est de type triphasé à courant continu sans collecteur de commutation. Il comporte trois bobinages associés aux trois phases du stator et notés respectivement R, S, et T. Ces bobinages sont connectés en étoile, leur point commun N étant le point neutre, relié au travers de la résistance 2, de faible valeur, à un point de masse M.

Le rotor comporte un aimant produisant un champ d'induction orienté selon un axe magnétique radial. Ce champ fait, avec un point de référence du stator, un angle ϕ qui est, selon la terminologie convenue, l'angle du rotor.

Le circuit de commande 3 est connecté aux trois bobinages R, S et T, ainsi qu'au générateur d'impulsions 4. Il est destiné à fournir, en temps voulu, les courants nécessaires pour créer un champ magnétique tournant et engendrer ainsi un couple sur le rotor afin d'en assurer le mouvement.

Le générateur d'impulsions 4 est relié à la masse M et aux bornes libres des bobinages d'au moins deux phases, par exemple R et T, ainsi qu'aux moyens 7 destinés à désactiver le circuit de commande 3.

Le circuit de mesure 5 comporte deux entrées reliées aux bornes de la résistance 2 et une sortie reliée aux moyens de calcul 6. Il est agencé pour mesurer la tension aux bornes de la résistance 2 dont la valeur est connue, ce qui permet de déterminer l'intensité du courant passant dans cette résistance. Le circuit 5 est commandé par une base de temps, non représentée au dessin, permettant d'effectuer les mesures à des intervalles de temps prédéfinis.

Les moyens de calcul 6 comportent une entrée et une sortie, respectivement reliées au circuit de mesure 5 et au circuit de commande 3.

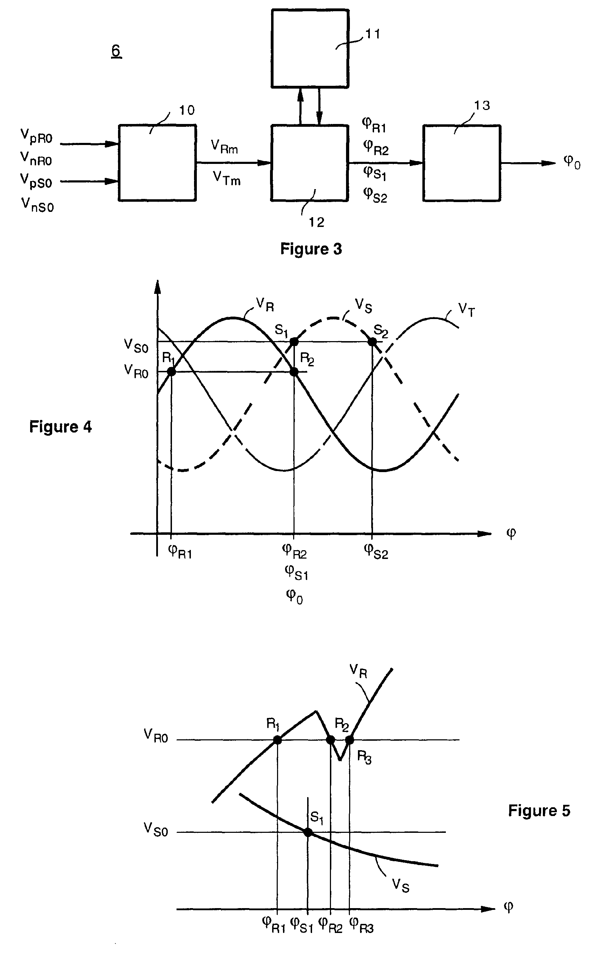

Comme le montre la figure 3, les moyens de calcul 6 sont formés d'un circuit soustracteur 10, d'une mémoire 11, d'un circuit de comparaison 12 et d'un circuit de détermination 13. Les circuits 10, 12 et 13 sont branchés en série, tandis que la mémoire 11 est connectée au circuit 12.

Les moyens 7 pour désactiver le circuit de commande 3 comportent une entrée et une sortie, respectivement reliées au générateur d'impulsions 4 et au circuit de commande 3.

Pour assurer l'entraînement du rotor, le circuit de commande 3 fait passer séquentiellement, dans les bobinages R, S et T, un courant qui induit un champ d'induction dans le stator. Il en résulte un couple moteur appliqué au rotor, qui le fait tourner à une vitesse fonction des conditions d'alimentation des bobinages.

Ce mode de faire est bien connu de l'homme du métier. Il est appliqué aux moteurs dits synchrones. Pour que le rendement du moteur soit optimum, il est nécessaire que le champ induit par le courant fasse un angle de 90° environ avec l'axe magnétique du rotor. Dans le cas des moteurs synchrones classiques, cet ajustement se fait de manière automatique, le rotor accordant sa vitesse de rotation à celle du champ tournant. Une telle solution ne permet pas toutefois de brusques variations de vitesse, ni de mouvements lents.

Pour résoudre ce problème, il est nécessaire de mesurer la position du rotor. A cet effet, le circuit de commande 3 adresse au générateur d'impulsions 4 des informations lui permettant de définir le rythme de mesure de la position du rotor. Pour un moteur tournant à une vitesse d'environ 10 tours par seconde, la mesure peut avantageusement se faire toutes les 10 ms.

A chaque fois que le générateur 4 doit effectuer une mesure, il commence par adresser un signal aux moyens 7 qui désactivent momentanément le circuit de commande 3. L'alimentation est interrompue durant 200µs environ. Durant ce temps, le générateur 4 applique, tout d'abord, entre la borne libre du bobinage R et la masse M, une paire d'impulsions comportant une première impulsion de tension continue positive d'amplitude V*p*, maintenue pendant un temps de durée τ_{*i*}, comme cela est représenté sur la fig. 2a, puis une deuxième impulsion de tension, de polarité inverse *V*_{*n*}, de même amplitude et de même durée que l'impulsion précédente.

Les deux impulsions créent, dans le bobinage R, un premier courant, puis un deuxième courant de sens opposé. Ces impulsions sont définies de manière que leur intensité soit insuffisante pour produire une action mécanique significative sur le rotor, mais suffisante pour que le champ magnétique qu'elles induisent amène le matériau du stator à saturation lorsque celui-ci s'additionne au champ magnétique du rotor.

En traversant la résistance 2, ces deux courants produisent à ses bornes respectivement une première tension, notée *V*_{*pR*}, et une deuxième tension, notée *V*_{*nR*}, représentatives de ces courants et dont les variations en fonction du temps, mesurées au moyen du circuit 5, sont visibles sur la fig.2b.

Il apparaît clairement sur cette figure que les tensions mesurées *V*_{*pR*} et *V*_{*nR*} sont différentes, bien que les tensions appliquées aux bornes R et M soient égales en valeur absolue. Cela provient du fait que le champ magnétique induit par ces impulsions s'additionne à - ou se soustrait de - celui du rotor. Lorsqu'il y a addition, le matériau magnétique du stator est saturé, de sorte que le courant résultant est plus faible. C'est pourquoi, la tension *V*_{*pR*} croît plus lentement que *V*_{*nR*}.

En d'autres termes, les tensions mesurées *V*_{*pR*} et *V*_{*nR*} présentent des caractéristiques qui sont fonction de la position du rotor. A une autre position du rotor, correspondraient donc des courbes similaires mais différentes.

Il y a lieu de relever qu'il n'y a pas bi-univocité entre les signaux relevés aux bornes de la résistance 2 et la position du rotor. Aussi, pour lever l'ambiguïté qui en résulte, il est nécessaire d'effectuer, directement après, au cours de la même interruption de l'alimentation, une deuxième mesure, selon des modalités identiques, la tension de mesure étant appliquée sur un autre bobinage, par exemple le bobinage T.

Dans le dispositif de la figure 1, le circuit de mesure 5 détermine la valeur qu'atteint la tension après un intervalle de temps de mesure donné τₘ, compté à partir du début de l'application de l'impulsion de tension. Des circuits remplissant cette fonction et mémorisant la valeur ainsi obtenue sont bien connus, et ne seront donc pas décrits.

Dans la suite de la présente description, les valeurs qu'atteignent les tensions *V*_{*pR*} et *V*_{*nR*} du bobinage de la phase R après l'intervalle *τ*ₘ seront désignées respectivement par *V*_{*pRm*} et *V*_{*nRm*}. Ces paramètres, mesurés, ne dépendent que de la position du rotor. De manière analogue, les paramètres associés aux bobinages des phases S et T seront désignés respectivement par *V*_{*pSm*}, *V*_{*nSm*} et *V*_{*pTm*}, *V*_{*nTm*}*.*

La connaissance des paramètres *V*_{*pRm*} et *V*_{*nRm*}, *V*_{*pSm*} et *V*_{*nSm*}, *V*_{*pTm*} et *V*_{*nTm*}, permet de déterminer la position angulaire *ϕ* du rotor. Ceci est réalisé à l'aide des moyens de calcul 6 représentés sur la figure 3.

A chaque fois qu'une mesure est effectuée, le circuit de mesure 5 adresse la valeur du paramètre mesuré aux moyens de calcul 6 et, plus particulièrement, au circuit soustracteur 10. A chaque fois que ce dernier a reçu les paramètres relatifs à une paire d'impulsions, il calcule *V*_{*m*} *= V*_{*pm*} *- V*_{*nm*}, pour la phase considérée. L'opération est répétée avec une deuxième phase. Dans l'exemple décrit ci-dessus, le circuit soustracteur 10 calcule donc la valeur de *V*_{*Rm*} et *V*_{*Tm*}.

Comme cela a été expliqué plus haut, la connaissance de *V*_{*Rm*} et *V*_{*Tm*} permet de connaître la position angulaire du rotor.

Pour déterminer cet angle, on met en mémoire un diagramme représentant la variation de *V*_{*Rm*} *et V*_{*Tm*} en fonction de ϕ. Le diagramme, représenté sur la figure 4, montre que cette variation se fait sensiblement en sinusoïde. Les courbes correspondant à chacun des bobinages sont déphasées de 120°. Ce diagramme est stocké dans la mémoire 11.

Les valeurs de *V*_{*Rm*} *et V*_{*Tm*} issues du circuit soustracteur 10 sont adressées au comparateur 12 qui va chercher dans la mémoire 11 quelles sont les valeurs de *ϕ* qui correspondent à *V*_{*Rm*} *et V*_{*Tm*} et les adresse au circuit de détermination 13. Ce dernier, en fait un soustracteur, a pour fonction de définir l'angle ϕ_{*0*} en se basant sur le fait qu'il est nécessairement commun aux deux courbes *V*_{*R*} et *V*_{*S*}. Ce circuit, dont la réalisation est à la portée de l'homme du métier, calcule les écarts *ϕ*_{*R1*} *- ϕ*_{*S1*}, *ϕ*_{*R1*} - *ϕ*_{*S2*}, *ϕ*_{*R2*} - *ϕ*_{*S1*}, *ϕ*_{*R2*} - *ϕ*_{*S2*} et sélectionne les angles dont l'écart est nul, ceux-ci correspondant à l'angle cherché ϕ_{*0*}. Dans le cas représenté *ϕ*_{*0*} *= ϕ*_{*R2*} *= ϕ*_{*S1*}*,* comme le montre la figure 4.

Bien entendu, le même angle ϕ_{*0*} aurait été obtenu avec un autre choix pour les deux fonctions, en prenant par exemple *V*_{*R*} et *V*_{*T*}*.* Une variante consiste à définir les équations des courbes représentant, pour au moins deux bobinages, la variation de *V* en fonction de ϕ. Dans ce cas, les différentes valeurs possibles de ϕ sont calculées, puis comparées pour choisir finalement la valeur *ϕ*_{*0*} commune aux deux courbes. La mémoire est alors complétée par une unité de calcul qui détermine les valeurs possibles de ϕ à partir des équations *ϕ(V)* et les adresse au comparateur 12. La mémoire 11 renferme les paramètres qui définissent ces équations.

Il faut remarquer que l'égalité des angles *ϕ*_{*R2*} et *ϕ*_{*S1*} correspond à un cas théorique. En réalité, ce sont les angles dont l'écart en valeur absolue est le plus faible qui définissent une plage à l'intérieur de laquelle se trouve l'angle cherché, auquel peut avantageusement être attribuée la valeur moyenne de *ϕ*_{*R2*} et de *ϕ*_{*S1*}*.* Il apparaît ainsi une certaine incertitude sur l'angle.

La précision de la mesure peut être améliorée par l'utilisation de la troisième fonction, soit *V*_{*T*}*.* En effet, cela permet de déterminer trois plages, dont l'intersection définira une plage plus étroite pour l'angle cherché.

En pratique, les variations des fonctions *V*_{*R*}, *V*_{*S*} et *V*_{*T*} sont moins régulières que celles des courbes de la figure 4, et peuvent présenter localement des sauts brusques de signes opposés, comme cela est montré sur la figure 5 à échelle agrandie pour *V*_{*R*}, alors que *V*_{*S*} varie régulièrement. De telles fluctuations sont dues aux formes particulières du stator.

Dans l'exemple de la figure 5, à une tension *V*_{*R0*} correspondent trois angles *ϕ*_{*R1*}, *ϕ*_{*R2*}, *ϕ*_{*R3*} et à une tension *V*_{*S0*} un angle *ϕ*_{*S1*}*.* Dans ce cas, le circuit de détermination 13 calcule les écarts *ϕ*_{*R1*} *- ϕ*_{*S1*}*, ϕ*_{*R2*} *- ϕ*_{*S1*}, *ϕ*_{*R3*} - *ϕ*_{*S1*}. La valeur *ϕ*_{*R2*} - *ϕ*_{*S1*} étant la plus faible, l'angle ϕ_{*0*} est alors défini comme (ϕ_{*S1*} *+ ϕ*_{*R2)/2*}.

L'angle ϕ_{*0*} étant connu, il est transmis au circuit de commande 3 afin qu'il alimente les trois phases du stator en courant et produise les champs d'induction magnétique tournants nécessaires pour que le rotor démarre dans le bon sens et avec le couple optimal (figure 1). Ensuite, le circuit de commande 3 crée, selon un programme préétabli, des fenêtres de mesure de durée d'environ 4τ_{*i*}, pendant lesquelles il interrompt l'alimentation en courant du stator et transmet un signal au générateur d'impulsions 4. En réponse à chaque signal, émis aux instants *t*_{*1*}, *t*_{*2*}... *t*_{*n*}*,* débute un cycle de mesure fournissant respectivement les angles *ϕ*_{*1*}*, ϕ*_{*2*}*...ϕ*_{*n*} au circuit de commande 3. Avec ces informations, le circuit de commande peut asservir le champ inducteur tournant à l'angle du rotor pour produire le couple optimum jusqu'à la vitesse limite.

Toutes les fonctions accomplies par le circuit de commande 3 sont connues de l'art antérieur. En effet le document US 5 117 165 (Cassat) déjà cité, par exemple, divulgue un dispositif qui se distingue de celui qui vient d'être décrit du fait qu'il ne permet la détermination de la précision du rotor qu'à l'arrêt et avec une précision de 30° pour un moteur triphasé. Cette amélioration est obtenue grâce aux caractéristiques du circuit de calcul 6 du présent document. Tous les autres circuits ont un circuit correspondant similaire, du point de vue fonctionnel, dans l'autre document.

Il est bien entendu que le dispositif qui vient d'être décrit peut subir encore d'autres modifications et se présenter sous d'autres variantes évidentes pour l'homme du métier, sans sortir du cadre de la présente invention.

Parmi ces variantes, on relèvera la possibilité d'obtenir un résultat tout à fait comparable avec un générateur d'impulsions 4 dans lequel ce n'est pas la durée de l'impulsion qui est constante mais l'intensité du courant mesurée, comme expliqué plus haut. En effet, il est aussi possible de choisir l'intensité du courant, la charge ou encore la pente du signal mesuré comme paramètre fixe et la durée, la charge ou la pente du signal mesuré comme paramètre mesuré, le même paramètre ne pouvant, bien entendu, pas être, à la fois, fixe et mesuré.

Dans la description faite ci-dessus, la mesure s'effectue en considérant que le rotor ne bouge pas entre deux impulsions successives. Cette approximation n'affecte pas la qualité de la mesure, du moins tant que la vitesse de rotation du rotor est faible et que les courbes *V(ϕ)* présentent des structures régulières. Si la précision de la mesure doit être améliorée, il est alors possible, dans le second mode de réalisation donné ci-dessus à titre de variante, de calculer l'angle probablement parcouru par le rotor entre les impulsions de mesure, à partir de la vitesse antérieurement déterminée.

Selon l'application, la durée entre deux mesures successives peut considérablement varier en fonction des contraintes auxquelles le moteur est soumis. Il est également possible d'améliorer la précision de la mesure en étalonnant chacun des moteurs de manière que les valeurs enregistrées dans la mémoire 11 correspondent exactement aux caractéristiques du moteur. Toutefois, dans la plupart des applications, les mêmes courbes peuvent être mémorisées pour un même type de moteur.

Dans le circuit de commande du dispositif de la figure 1, l'alimentation se fait phase par phase. Il est, bien entendu, également possible de les alimenter selon des séquences appelées par l'homme du métier "2 phases-ON" et "3 phases-ON" dans lesquelles les impulsions motrices sont respectivement adressées simultanément à deux et aux trois bobines.

Afin de faciliter la description, le dispositif selon l'invention a été décrit comme comportant plusieurs circuits reliés les uns aux autres pour mesurer la position du rotor. Il va de soi que, dans la pratique, les fonctions assurées par le générateur d'impulsion 4, le circuit de mesure 5 les moyens de calcul 6 et les moyens 7 de désactivation peuvent être remplacés par un microprocesseur dûment programmé.

## Revendications

1. Procédé de détermination de la position angulaire du rotor d'un moteur électromagnétique sans collecteur de commutation, du type comportant un stator formé d'une armature en matériau magnétique doux et de plusieurs bobinages disposés au voisinage de ladite armature et munis chacun de deux bornes, et un rotor comportant un aimant définissant un axe magnétique et disposé en regard du stator, **caractérisé en ce qu'**il comporte les étapes suivantes:
■ appliquer, respectivement aux bornes d'un premier puis d'un deuxième bobinage, une paire d'impulsions successives de polarité inverse, déterminées par une durée, une intensité, une charge et une pente, l'un de ces paramètres ayant une valeur prédéfinie et les autres une valeur dépendant du temps et de la position du rotor,
■ déterminer, pour chaque impulsion, un signal d'un premier type représentatif de l'un des paramètres dont la valeur n'est pas prédéfinie,
■ définir deux signaux d'un deuxième type respectivement représentatifs de la valeur de la différence entre les signaux du premier type correspondant à chaque bobinage,
■ établir, à partir d'informations initialement mémorisées, une corrélation avec les valeurs des signaux du deuxième type pour déterminer les positions angulaires possibles dudit rotor, et
■ sélectionner parmi lesdites positions angulaires celle qui est la plus probable.

2. Procédé selon la revendication 1, **caractérisé en ce que** le paramètre prédéfini est un temps et ledit signal est représentatif de l'intensité dudit courant.

3. Procédé selon l'une des revendications 1 et 2, **caractérisé en ce que** ledit moteur est alimenté par l'application d'une tension aux bornes des bobinages, à l'exception des périodes durant lesquelles lesdites paires d'impulsions sont appliquées.

4. Dispositif de mesure de la position du rotor d'un moteur électromagnétique
(1) sans collecteur de commutation, du type comportant un stator formé d'une armature en matériau magnétique doux et de plusieurs bobinages disposés au voisinage de ladite armature et munis chacun de deux bornes, et un rotor comportant un aimant et disposé en regard du stator, **caractérisé en ce qu'**il comporte:
■ un générateur d'impulsions (4) comportant des moyens pour appliquer, respectivement aux bornes d'un premier puis d'un deuxième bobinage, une paire d'impulsions successives de polarité inverse, déterminées par une durée, une intensité, une charge et une pente, l'un de ces paramètres ayant une valeur prédéfinie et les autres une valeur dépendant du temps et de la position du rotor,
■ un circuit de mesure (5) fournissant, pour chaque impulsion, un signal d'un premier type représentatif de l'un des paramètres dont la valeur n'est pas prédéfinie, et
■ des moyens de calcul (6) comportant:
- un circuit soustracteur (10) connecté audit circuit de mesure (5) et fournissant deux signaux d'un deuxième type respectivement représentatifs de la différence entre les signaux du premier type correspondant à chaque bobinage,
- une mémoire (11) contenant des informations établissant une corrélation entre les valeurs des signaux de deuxième type et la position angulaire dudit rotor,
- un circuit de comparaison (12) connecté à ladite mémoire et audit circuit soustracteur, pour déterminer, à partir des valeurs des signaux de deuxième type et en référence aux informations contenues dans ladite mémoire, les positions angulaires possibles dudit rotor, et
- un circuit de détermination (13) relié audit circuit de comparaison, pour définir laquelle desdites positions angulaires est la plus probable.

5. Dispositif selon la revendication 4, destiné à équiper un moteur comportant un circuit de commande (3) relié audites bornes pour alimenter séquentiellement les bobinages du stator et créer un champ d'induction magnétique tournant produisant un couple sur le rotor, **caractérisé en ce qu'**il comporte, en outre, des moyens pour désactiver le circuit de commande durant l'application desdites impulsions.

6. Dispositif selon l'une des revendications 4 et 5, **caractérisé en ce que** ledit circuit de mesure (5) comporte des moyens pour mesurer la valeur qu'atteint l'intensité du courant après un temps de durée prédéterminée.

7. Dispositif selon l'une des revendications 4 à 6, **caractérisé en ce que** ledit circuit de comparaison (12) comporte des moyens pour déterminer un premier ensemble de positions angulaires correspondant au premier signal de deuxième type, et un deuxième ensemble de positions angulaires correspondant au deuxième signal de deuxième type, et **en ce que** le circuit de détermination (13) comporte:
■ des moyens pour comparer les positions angulaires du premier et du deuxième ensemble et pour sélectionner l'angle commun aux deux ensembles, et
■ des moyens pour transmettre la valeur dudit angle comme position instantanée du rotor.
